# EUROPEAN PATENT SPECIFICATION

(11) **EP 1 670 268 B1**
(45) Date of publication and mention of the grant of the patent: **21.10.2009**
(21) Application number: 04300857.2
(22) Date of filing: 08.12.2004
(51) Int. Cl.: H04W 64/00

(54) **Method, system and chip card for tracking the location of a mobile station**
Verfahren, System und Chipkarte zum Verfolgen des Standorts einer Mobilfunkstation
Procédé, système et carte à puce pour suivre une station mobile

(43) Date of publication of application: 14.06.2006
(73) Proprietor: Gemalto SA, 92190 Meudon (FR)
(72) Inventor: Kaushik, Ajay, 641517, Singapore (SG)
(74) Representative: Grevin, Emmanuel

(56) References cited:
- EP-A- 1 463 366
- WO-A-03/105501
- US-B1- 6 295 454

## Description

This invention relates to a method, system and chip card for tracking the location of a mobile station, and more particularly, to a method, system and chip card for informing a backend server associated with the mobile station that there is a change in location of the mobile station.

US6295454 relates to a method for requiring a mobile station that calculated its own position within a cellular network to report the calculated location to a requester.

Currently many mobile networks, such as GSM (Global System for Mobile communications) networks, include a backend server that is connected thereto that provides a number of value-added location-based services. The backend server is thus sometimes known as a generic value-added-service (VAS) server, an over-the-air (OTA) server or network-tracking server, depending on the application it provides. The services provided by the backend server typically require that the backend server be informed of the location of the mobile subscriber, more specifically the location of the mobile station, for example when it roams into aforeign network. In order to provide such information to the backend server, the home mobile network associated with the mobile station includes a "sniffer"or probe connected thereto that sniffs or monitors mobile-originated location update messages addressed to or destined for, in the case of a GSM network, a home location register (HLR) of the home network. The probe is able to extract the necessary location information from the location update messages and to forward the location information to the backend server for processing thereat. The mobile station does not by itself send any message directly to the backend server. Such an implementation involving the use of a probe equipment is disclosed in EP-A-1463366.

This implementation suffers a variety of drawbacks. One major drawback is the cost of the probe equipment, which even at an entry level, may amount to hundreds of thousands of euros. The probe equipment also requires regular support and maintenance services, both of which further add to the cost of the solution. Moreover, vendors of the probe equipment are also separate from those of the other equipment of the mobile network. Consequently, equipment integration issues when deploying the network are exacerbated with such a solution requiring a probe equipment.

Some probe equipment rejects authentication when it determines that the mobile station is connected to a non-preferred network when there is a preferred network at the location of the mobile station. If the operator of the non-preferred network has a roaming agreement with the home network operator of the mobile subscriber, such authentication rejections by the probe equipment would not bode well for the business relationship between the two operators. There is thus a need for a more cost-effective and business friendly method for tracking the location of a mobile station.

WO-A-031105501 is considered to be the closest Prior Art document and relates to a method for tracking a location of a mobile station. Such a document discloses that the mobile station detects a change in location of the mobile station. The invention is more particularly defined by the set of claims that is herewith attached.

Other aspects and advantages of the invention will become apparent from the following detailed description, taken in conjunction with the accompanying drawings, illustrating by way of example the principles of the invention.

The invention will be better understood with reference to the drawings, in which:
Figure 1 is a schematic drawing of a GSM mobile communications system that includes several GSM networks and a location-tracking system according to one embodiment of the invention, the location-tracking system including a mobile station and a backend server;
Figure 2 is a schematic drawing of the mobile station in Figure 1, the mobile station including a mobile equipment and a subscriber identity module (SIM); and
Figure 3 is a flowchart showing a method in the location-tracking system in Figure 1 for tracking the location of the mobile station.

As shown in the drawings for purposes of illustration, the invention is embodied in a novel location-tracking system and method for tracking the location of one or more mobile stations. Existing solutions have suffered from high equipment, and support and maintenance cost.

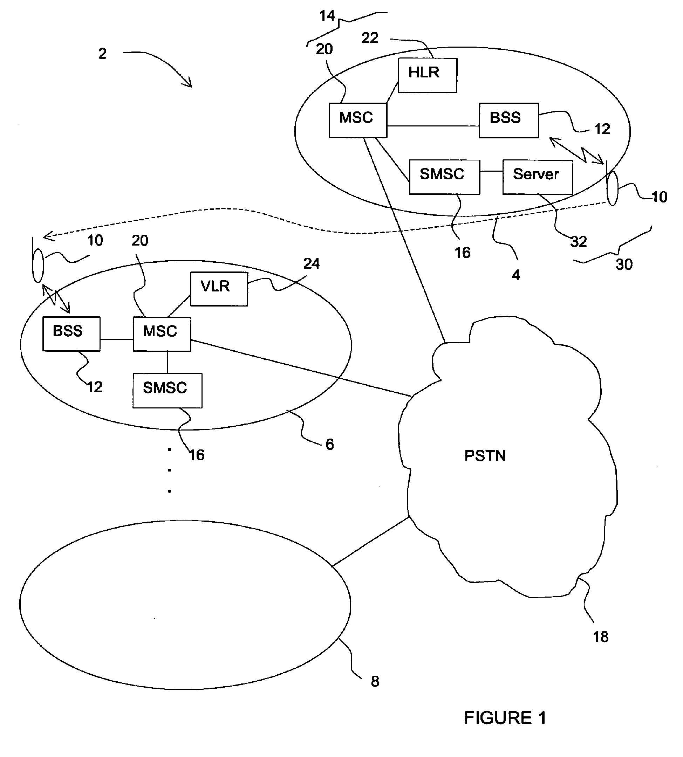

Figure 1 shows a simplified GSM (Global System for Mobile communications) communications system 2 that includes several GSM networks 4, 6, 8. These networks 4, 6, 8 include a home network 4 to which a mobile subscriber subscribes to and is thus associated therewith, and several other networks 6, 8 which communicate with each other using mobile application part (MAP) and signaling system #7 (SS7) protocol signaling. These other networks 6, 8 may be networks associated with other mobile network operations or virtual networks associated with mobile virtual network operators (MVNOs) operating in the home country; or foreign networks. The principle component groups of each GSM network 4, 6, 8 includes a mobile station (MS) 10, a base station system (BSS) 12, a network switching system 14 and a short message service center (SMSC) 16. The mobile station (MS) 10 includes but is not limited to a mobile phone. The base station system 12 provides the radio inter-connection from the mobile station 10 to the network switching system 14. The network switching system 14 interconnects the GSM network 4, 6, 8 and the Public Switched Telephone Network (PSTN) 18. The network switching system 14 includes a Mobile Services Switching Centre (MSC) 20 and location registers 22, 24, such as a Home Location Register (HLR) 22 and a Visitor Location Register (VLR) 24. These location registers 22, 24 are database-oriented processing nodes for managing subscriber data and keeping track of a mobile subscriber's location as it roams around the GSM communication system 2, i.e. keeping track of which MSC 20 and VLR 24 the mobile subscriber is being currently served.

The GSM communication system 2 also includes a location tracking system 30 according to an embodiment of the invention. The location-tracking system 30 includes the mobile station 10 and a backend server 32 connected to the SMSC 16 either via a local area network (LAN), a wide area network (WAN), or a virtual private network (VPN). The SMSC 16 delivers short message service (SMS) messages to the mobile station 10 and the backend server 32.

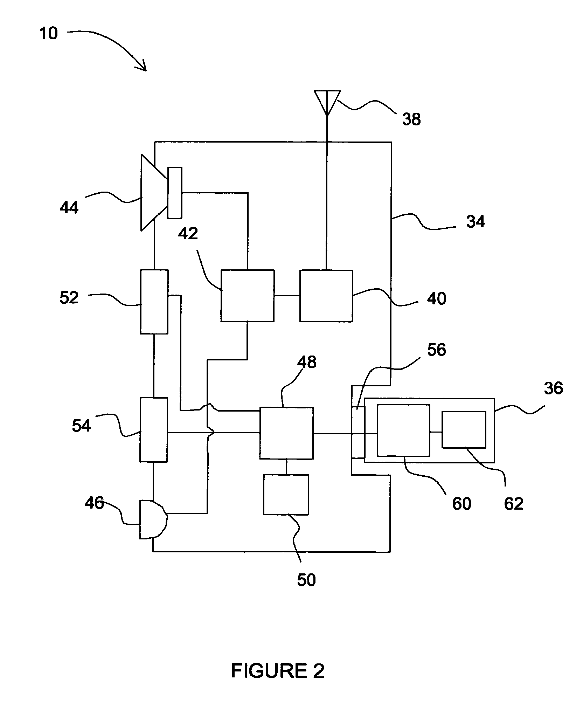

Referring to Figure 2, the mobile station 10 includes a mobile equipment (ME) 34 and an electronic "smart card" or chip card (equipped with a microprocessor), which is known as a subscriber identity module (SIM) 36 when used in a GSM network. The mobile equipment 34 has an identity number, the International Mobile Equipment identity (IMEI), associated with it which is unique to that particular mobile equipment. This IMEI is stored in the mobile equipment.

The mobile equipment 34 includes a processor 48 and its associated memory 50. The mobile equipment 34 is connected to the removable SIM 36 via electrical contacts 56.

The SIM 36 includes a SIM processor 60 and a SIM memory 62. The SIM 36 is used for the storage and retrieval of data items by the processor 48 of the mobile equipment 34. The command set, data file structure and data coding used for data communicated via the interface between the mobile equipment processor 48 and the SIM processor 60 are specified in 3GPP technical specification 11.11 or ETSI Technical Specification 100.977.

Applications are stored on the SIM 36 card and they allow interactions between the SIM 36 and the mobile equipment 34. These applications may be supported by the SIM application toolkit or a similar platform. The applications may be developed using a number of computer programming languages, such as C, Java™ or any other proprietary programming language.

Typical applications include downloading data and "events" to the SIM 36. Data records are stored in what is known as elementary files in the SIM memory 62.

Each elementary file includes a header and a body part. One example of such an elementary file stored in the SIM memory 62 is a list of preferred networks. Each entry in the list includes the mobile country code (MCC) and the mobile network code (MNC) of a preferred network. Another example is the location information (LOCI) elementary file. This LOCI elementary file includes the temporary mobile subscriber identity (TMSI), location area information (LAI) and location update status information.

According to one embodiment of the invention, a SIM toolkit application stored in the SIM memory 62 is used to track the location of a mobile equipment 34 to which the SIM 36 is connected to. Such an application is also known as an applet, or more specifically a card let, when implemented on a Java™ card type of SIM.

When the mobile subscriber holding the mobile station 10 moves from one cell location to another, such as that shown by the broken line in Figure 1, the location area information (LAI) in the LOCI elementary file on the SIM 36 is updated. This update causes a location update message to be sent by the mobile station 10 to the home location register 22 of the home network 4. This update also triggers the execution of the location-tracking application on the SIM 36. In order to achieve this, the location-tracking application registers its interest in the event that the LOCI elementary file is updated.

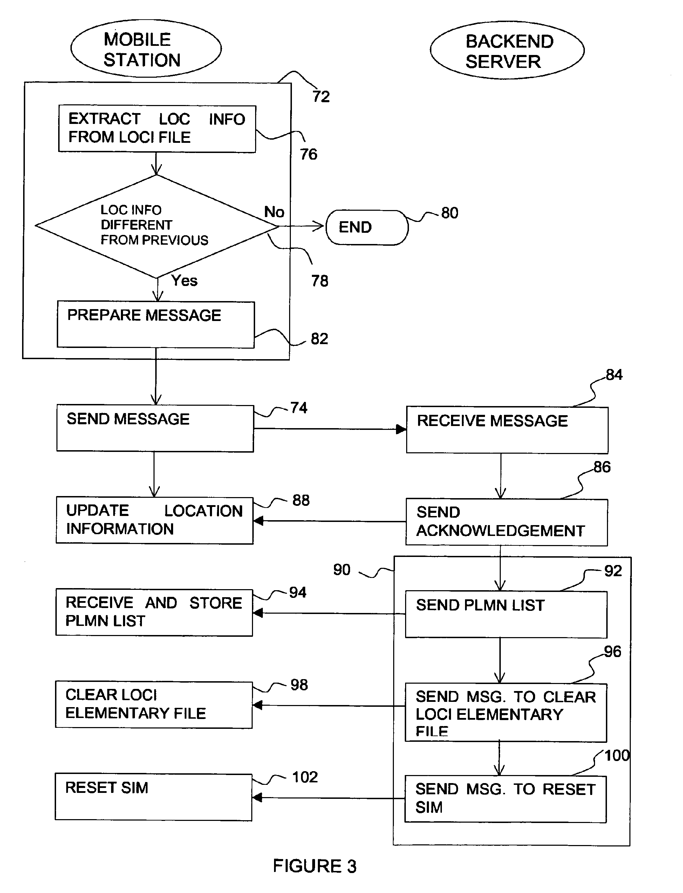

Execution of the location-tracking application performs a method for tracking the location of the mobile station 10. Figure 3 is a flowchart 70 showing a sequence of steps that implements the method. The method includes detecting 72 by the mobile station 10 that there is a change in location of the mobile station 10, and sending 74 a mobile-originated message addressed to the backend server 32 associated with the mobile station 10. The message contains the new location of the mobile station 10. Detecting 72 a change of location includes maintaining (not shown) a previous location field in the SIM memory 62. This previous location field is initialized in the factory for example to a value of zero to indicate that no connection to any network has occurred.

During detecting, the application extracts 76 the mobile country code (MCC) from the LAI field of the LOCI elementary file. The MCC value as extracted from the LOCI elementary file is then compared 78 with the MCC value in the previous location field.

If both country codes are the same, execution of the application ends 80. If, on the other hand, the MCC has changed as determined from the comparison of the MCC extracted from the LOCI elementary file and that stored in the previous location field, the application prepares 82 a short message that includes the MCC obtained from the LOCI elementary file and the previous location field and time. The application then instructs the ME to automatically, i.e. without any user intervention, send 74 the short message addressed to the backend server 32. It should be noted that this short message is different from, and is sent in addition to, the usual location update message that the mobile station 10 sends to the home location register 22 in the home network 4.

When the backend server 32 receives 84 the mobile-originated message addressed thereto, the backend server 32 sends 86 an applicative acknowledgement (also known as an end-to-end acknowledgement) to the mobile station 10. The location-tracking application then proceeds to store 88 the MCC and MNC obtained from the LOCI elementary file into the previous location field for use at the next instance the application is started. That is the mobile station updates the previous location field with the relevant information obtained from the LOCI elementary file. In this manner, the mobile station 10 is able to determine on its own and accordingly inform the backend server 32 associated therewith of a change in its location. The previous location field may be updated when a terminal response acknowledgement message is received from the network 4 instead of when the applicative acknowledgement from the backend server 32 is received.

Advantageously, the system 30 and method described above are simple and effective. The method is implemented without the need for any additional equipment, such as a probe equipment used in the prior art. Only the software in the mobile station 10, more specifically the SIM 36 of the mobile station 10, and backend server 32, which are currently existing in a GSM network, need to be modified to implement the method.

At the backend server 32, the receipt of the mobile-originated short message sent by the mobile station 10 may be made to execute 90 one or more applications residing in the backend server 32. One of these applications is a PLMN list update application. The execution of this application causes the backend server 32 to send 92 a location-specific PLMN list to the mobile station 10 via binary SMS. When used for such an application, the backend server 32 is also known as an over-the-air (OTA) server 32. The mobile station 10 receives and overwrites 94 the PLMN list in the SIM memory 62 with the location-specific PLMN list sent by the backend server 32. In order for this new PLMN list to take effect, the backend server 32 sends 96 an explicit message, such as a SIM toolkit (STK) command, to the mobile station 10 to instruct the SIM 36 to clear 98 the LOCI elementary file. Alternatively, an application in the SIM may automatically clear the LOCI elementary file when processing 88 the location-specific PLMN list received from the backend server 32. The backend server 32 finally sends 100 a Refresh (SIM Reset) message to the mobile station 10 to cause the SIM 36 to reset 102. Execution of the application on the backend server 32 ends 92 with the sending of this Refresh message. Resetting the SIM causes the mobile station 10 to attempt connection or attachment to another network. In other words, the mobile station 10 is caused to reconnect to a network based on the updated PLMN list. In another embodiment, the backend server 32 may send the location-specific PLMN list to the mobile station 10 only when it is determined that the time interval between the receipt of the last two location update short messages from the mobile station 10 exceeds a predetermined interval.

The mobile station 10 will try to connect to another network according to any known algorithm. Since the LOCI elementary file is cleared, it is no longer possible for the mobile station 10 to connect to the network it was previously connected to. The mobile station 10 would instead attempt to connect to one of the networks in the PLMN list in a sequence determined by the order of the entries in the PLMN list. That is, the mobile station 10 would try to connect to a network whose information is stored in the first entry in the PLMN list. If that is not successful, the mobile station would try to connect to another network whose information is stored in the second entry in the PLMN list and so on until it successfully connects to a network.

Advantageously, reconnection to a preferred network is achieved within a finite time that is more acceptable to a mobile subscriber than prior art methods. As such, less battery power is consumed by the mobile station. When compared with prior art methods, this solution also requires less SIM memory to implement.

Although the invention is described as implemented in the above-described embodiment wherein a location-tracking application is implement in a SIM card for a GSM network, it is not to be construed to be limited as such. For example, the method may be implemented in the mobile equipment instead. As another example, the method may also be implemented in a Universal Integrated Circuit Card (UICC) and a DECT authentication module (DAM) when used in a third generation (3G) network and a DECT network respectively.

As yet another example, the BSS 12 with the appropriate previous location information sent thereto by the mobile station 10, or the HLR 22, may also send the location update short message to the backend server 32.

## Claims

1. A method for tracking a location of a mobile station (10), the method comprising a first step in which the mobile station (10) detects a change in location of the mobile station (78),
**characterized in that** the method successively comprises the following steps:
- the mobile station sends (74) to a backend server (84) associated with the mobile station a mobile-originated message that contains a current location of the mobile station; -the backend server detects that the current location is covered by at least one preferred network corresponding to the current location,
- the backend server sends to the mobile station a server-originated message comprising a list including at least one preferred network (92),
- the mobile station attempts to connect to at least one preferred network of the list.

2. A method according to Claim 1, wherein the location includes at least one of the following information item amongst a mobile country code (MCC), a mobile network code (MNC), and a location area code (LAC).

3. A method according to any one of the preceding claims, wherein the mobile-originated message is one of a short message service (SMS) message, a multimedia message service (MMS) message and a General Packet Radio Service (GPRS) message.

4. A method according to any one of the preceding claims, wherein the server-originated message is a binary short message service (SMS) message.

5. A method according to any one of the preceding claims,
wherein the list is an updated Public Land Mobile Network (PLMN) list.

6. A method according to Claim 5, wherein the method further comprises the following steps:
- the mobile station clears the current location; and
- the mobile station attempts to connect to at least one preferred network based on the updated PLMN list.

7. A method according to Claim 6, wherein clearing the current location comprises clearing a location Information (LOCI) elementary file, and attempting to connect to at least one preferred network based on the updated PLMN list comprises carrying out a Subscriber Identity Module (SIM) reset.

8. A method according to any of Claims 1 to 4, wherein the method further comprises:
- detecting the occurrence of fraud when a change of location of the mobile station is detected.

9. A mobile station location tracking system comprising:
- at least one mobile station (10) adapted to detect a change in location of the mobile station (78), and
- a backend server associated with the mobile station;
**characterized in that** the mobile station is adapted to:
- send to the backend server a mobile-originated message (74) containing a current location of the mobile station, and
- attempt to connect to another network; and
**in that** the backend server is adapted to:
- detect that the current location is covered by at least one preferred network corresponding to the current location,
- send to the mobile station a server-originated message comprising a list including at least one preferred network (92).

10. A chip card having a processor and a memory readable by the processor, the memory embodying a program of instructions, executable by the processor to perform a method for tracking a location of a mobile station to which the chip card is connectable, the processor being adapted to detect a change in location of the mobile station (78)
**characterized in that** the processor is adapted to:
- send to a backend server associated with the mobile station a mobile-originated message (74) containing a current location of the mobile station;
- receive a message (92) comprising a list including at least one preferred network corresponding to the current location, and
- attempt to connect to at least one preferred network of the list.

## Patentansprüche

1. Verfahren zum Aufspüren eines Standortes einer mobilen Station (10), wobei das Verfahren einen ersten Schritt umfasst, in dem die mobile Station (10) eine Änderung des Standortes der mobilen Station (78) feststellt,
**dadurch gekennzeichnet, dass** das Verfahren sukzessive die folgenden Schritte umfasst:
- die mobile Station sendet (74) an einen mit der mobilen Station verbundenen Nachserver eine aus der mobilen Station stammende Nachricht, die einen aktuellen Standort der mobilen Station enthält; - der Nachserver stellt fest, dass der aktuelle Standort durch wenigstens ein bevorzugtes Netzwerk abgedeckt ist, das dem aktuellen Standort entspricht,
- der Nachserver sendet an die mobile Station eine vom Server stammende Nachricht, die eine Liste umfasst, die wenigstens ein bevorzugtes Netzwerk (92) beinhaltet,
- die mobile Station versucht, sich an wenigstens ein bevorzugtes Netzwerk der Liste anzuschließen.

2. Verfahren gemäß Anspruch 1, in dem der Standort wenigstens eine der folgenden Informationen aus einem mobilen Landescode (MCC), einem mobilen Netzwerkcode (MNC) und einem Standortbereichscode (LAC) beinhaltet.

3. Verfahren gemäß einem der vorherigen Ansprüche, in dem die von der mobilen Station stammende Nachricht eine Nachricht aus einer Kurzmitteilungsdienst-Nachricht (SMS), einer Multimedia-Nachrichtendienst-Nachricht (MMS) und einer Allgemeinen Paketfunkdienst-Nachricht (GPRS) ist.

4. Verfahren gemäß einem der vorherigen Ansprüche, in dem die vom Server stammende Nachricht eine binäre Kurzmitteilungsdienst-Nachricht (SMS) ist.

5. Verfahren gemäß einem der vorherigen Ansprüche, in dem die Liste eine aktualisierte Liste eines Öffentlichen Mobilen Landnetzwerks (PLMN) ist.

6. Verfahren gemäß Anspruch 5, in dem das Verfahren weiterhin die folgenden Stufen umfasst:
- die mobile Station gibt den aktuellen Standort frei; und
- die mobile Station versucht, sich an wenigstens ein bevorzugtes Netzwerk anzuschließen, das auf der aktualisierten PLMN-Liste basiert.

7. Verfahren gemäß Anspruch 6, in dem der aktuelle Standort die Freigabe einer elementaren Standortinformations- (LOCI) Datei und den Versuch umfasst, sich basierend auf der aktualisierten PLMN-Liste wenigstens an ein bevorzugtes Netzwerk anzuschließen, und die Ausführung eines Zurücksetzens des Teilnehmeridentitätsmoduls (SIM) umfasst.

8. Verfahren gemäß Anspruch 1 bis 4, in dem das Verfahren weiterhin Folgendes umfasst:
- Feststellung des Auftretens von Betrug, wenn eine Änderung des Standortes der mobilen Station festgestellt wird.

9. Ein System zum Aufspüren eines Standortes einer mobilen Station, das Folgendes umfasst:
- wenigstens eine mobile Station (10), die angepasst ist, um eine Änderung des Standortes der mobilen Station (78) festzustellen und
- einen Nachserver, der mit der mobilen Station verbunden ist;
**dadurch gekennzeichnet, dass** die mobile Station angepasst ist, um
- an den Nachserver eine von der mobilen Station stammende Nachricht (74) zu senden, die einen aktuellen Standort der mobilen Station enthält, und
- zu versuchen, sich an ein anderes Netzwerk anzuschließen; und
darin, dass der Nachserver angepasst ist, um:
- festzustellen, dass der aktuelle Standort durch wenigstens ein bevorzugtes Netzwerk abgedeckt ist, das dem aktuellen Standort entspricht,
- an die mobile Station eine vom Server stammende Nachricht zu senden, die eine Liste umfasst, die wenigstens ein bevorzugtes Netzwerk (92) beinhaltet.

10. Chipkarte mit einem Prozessor und einem Speicher, der durch den Prozessor lesbar ist, wobei der Speicher ein Programm mit Anweisungen umfasst, die durch den Prozessor ausführbar sind, um ein Verfahren zum Aufspüren eines Standortes einer mobilen Station durchzuführen, an die die Chipkarte anschließbar ist, wobei der Prozessor angepasst ist, um eine Änderung am Standort der mobilen Station (78) aufzuspüren,
**dadurch gekennzeichnet, dass** der Prozessor angepasst ist, um:
- eine von der mobilen Station stammende Nachricht (74), die einen aktuellen Standort der mobilen Station enthält, an den mit der mobilen Station verbundenen Nachserver zu senden (1),
- eine Nachricht zu empfangen (92), die eine Liste umfasst, die wenigstens ein bevorzugtes Netzwerk umfasst, das dem aktuellen Standort entspricht, und
- zu versuchen, sich an wenigstens eines der bevorzugten Netzwerke aus der Liste anzuschließen.

## Revendications

1. Procédé de repérage d'un emplacement d'une station mobile (10), le procédé comprenant une première étape au cours de laquelle la station mobile (10) détecte un changement d'emplacement de la station mobile (78),
**caractérisé en ce que** le procédé comprend successivement les étapes suivantes :
- la station mobile envoie (74) à un serveur expéditeur (84) associé à la station mobile du serveur expéditeur un message ayant pour origine un mobile qui contient un emplacement actuel de la station mobile ;
- le serveur expéditeur détecte que l'emplacement actuel est couvert par au moins un réseau préféré correspondant à l'emplacement actuel,
- le serveur expéditeur envoie à la station mobile un message ayant pour origine le serveur comprenant une liste incluant au moins un réseau préféré (92),
- la station mobile tente de se connecter à au moins un réseau préféré de la liste.

2. Procédé selon la revendication 1, dans lequel l'emplacement inclut au moins l'une des informations suivantes parmi un code de pays de mobile (MCC), un code de réseau de mobile (MNC), et un code de zone de localisation (LAC).

3. Procédé selon l'une quelconque des revendications précédentes, dans lequel le message ayant pour origine un mobile est l'un parmi un message de service de message court (SMS), un message de service de message multimédia (MMS) et un message de système général de radiocommunication par paquets (GPRS) .

4. Procédé selon l'une quelconque des revendications précédentes, dans lequel le message ayant pour origine le serveur est un message de service de message court (SMS) binaire.

5. Procédé selon l'une quelconque des revendications précédentes, dans lequel la liste est une liste de réseau mobile terrestre public (PLMN) mise à jour.

6. Procédé selon la revendication 5, dans lequel le procédé comprend en outre les étapes suivantes :
- la station mobile efface l'emplacement actuel ; et
- la station mobile tente de se connecter à au moins un réseau préféré en se basant sur la liste PLMN mise à jour.

7. Procédé selon la revendication 6, dans lequel l'effacement de l'emplacement actuel comprend l'effacement d'un fichier élémentaire d'information d'emplacement (LOCI), et la tentative de se connecter à au moins un réseau préféré en se fondant sur la liste PLMN mise à jour comprend l'exécution d'une réinitialisation du module d'identité de l'abonné (SIM).

8. Procédé selon l'une quelconque des revendications 1 à 4 dans lequel le procédé comprend en outre :
- la détection de l'occurrence d'une fraude lorsqu'un changement d'emplacement de la station mobile est détecté.

9. Système de repérage d'emplacement de station mobile comprenant :
- au moins une station mobile (10) conçue pour détecter un changement d'emplacement de la station mobile (78) et
- un serveur expéditeur associé à la station mobile ;
**caractérisé en ce que** la station mobile est conçue pour :
- envoyer au serveur expéditeur un message ayant pour origine un mobile (74) contenant l'emplacement actuel de la station mobile, et
- tenter de se connecter à un autre réseau ; et **en ce que** le serveur expéditeur est conçu pour :
- détecter que l'emplacement courant est couvert par au moins un réseau préféré correspondant à l'emplacement actuel,
- envoyer à la station mobile un message ayant pour origine le serveur comprenant une liste incluant au moins un réseau préféré (92)

10. Carte à puce ayant un processeur et une mémoire lisible par le processeur, la mémoire représentant un programme d'instructions exécutables par le processeur pour mettre en oeuvre un procédé de repérage de l'emplacement d'une station mobile à laquelle la carte à puce peut se connecter, le processeur étant conçu pour détecter un changement d'emplacement de la station mobile (78),
**caractérisée en ce que** le processeur est conçu pour :
- envoyer à un serveur expéditeur associé à la station mobile un message ayant pour origine le mobile (74) contenant l'emplacement actuel de la station mobile ;
- recevoir un message (92) comprenant une liste incluant au moins un réseau préféré correspondant à l'emplacement actuel, et
- tenter de se connecter à au moins un réseau préféré de la liste.
